# EUROPEAN PATENT APPLICATION

(11) **EP 3 552 850 A1**
(43) Date of publication of application: **16.10.2019**
(21) Application number: 17877392.5
(22) Date of filing: 07.12.2017
(51) Int. Cl.: B60F 5/02, B62D 57/032, B62D 57/02

(54) **AUTOMOBILE GROUP**

(30) Priority: 08.12.2016 CN 201611119428
(71) Applicant: YU, Youhua, Beijing 102611 (CN)
(72) Inventor: YU, Youhua, Beijing 102611 (CN)
(74) Representative: Herrero & Asociados, S.L.
(86) International application number: PCT/CN2017/000720
(87) International publication number: WO 2018/103175

(57) **Abstract**

An automobile group consisting of basic components and function components, and configured to be assembled to have different functions. The basic components can be assembled with different function components to manufacture automobiles having different functions, such that the automobiles are adaptable to different environments.

## Description

### Technical field

The invention belongs to the field of automobile manufacturing technology. The invention relates to an automobile. In particular, a series of automobiles consisting of basic components and functional components that can be assembled into different functions is involved. Different basic components and functional components can be combined to produce different functions of the car, collectively known as the car family.

### Background technology

Automobile has become the most commonly used vehicle for people to walk. At present, gasoline and diesel fuel vehicles are commonly used. Electric Vehicles that Protect the Environment , Electric vehicles and fuel vehicles are basically the same except for the engines and the energy used. But these two cars can only travel on the road. Not applicable in the wild, in the water or in the air without roads, or difficult to adapt to rugged ground or impossible to use at all. Making a product that can be used in a variety of application scenarios , And it can easily replace functional components to obtain different functions of automobiles. Make the car can adapt to different environments, improve the performance-price ratio of the car.

### Summary of the invention

The object of the present invention is to address the above problems existing in the prior art. It provides a family of automobiles that can assemble and replace different functional components freely in order to obtain different functions.

The purpose of the present invention can be achieved by the following technical schemes : A Multifunctional Assemblable Vehicle , Including basic components : Chassis, engine, cockpit, crew cabin, luggage cabin ; Functional components : CVT, single-degree-of-freedom joint, two-degree-of-freedom joint, Four-Degree-of-Freedom mechanical leg, two-degree-of-freedom wheel, adaptive flapping wing

In the aforementioned multi-functional assemblable automobile , The basic components are as follows: Chassis 1 is located at the bottom of the car. The chassis 1 is equipped with engine 2, cockpit 3, crew cabin 4, energy cabin 5 and luggage cabin 6. There are several power interfaces on both sides of chassis 1. 7, 8, 9, 10, 11, 12 , The number of power interfaces can be increased as needed. The engine is decelerated by the reducer and connected with each power interface through the transmission shaft 13 and 14. Make the speed of each power interface consistent , And when the load of a power interface changes, the rotation speed turns faster or slower. Speed of engine is faster or slower by transmission of transmission shaft 13 and 14 , The rotational speed of other power interfaces will synchronize faster or slower.

In the aforementioned multi-functional assemblable automobile , The functional component CVT is composed of component a, component b, solar wheel c, inner gear ring D and planetary gear E. Component A is fixed by gear 1 and power input shaft 2. And the power input shaft 2 is fixed on the bracket 4 through the bearing 3. Fixed connection of gear 5 and control shaft 6 , And the control shaft 6 is fixed at the center of gear 8 through bearing 7. At the same time, the control shaft 6 is fixed on the support 4 through the bearing 9. Both the power input shaft 2 and the control shaft 6 extend on the same side of the bracket 4. Gear 1 meshes with gear 8 , Gear 10 is connected to shaft 12 through bearing 11 , Shaft 12 is fixed on gear 8 , It is located on the straight line L passing through the center of 8 circles of the gear. And gear 5 meshes with gear 10 , Reduction ratio of gear 5 to gear 10 is 1:1 , The gear 13 is fixed on the shaft 14. Shaft 14 is fixed on gear 8 through bearing 15. It is located on the straight line L passing through the center of 8 circles of the gear. And gear 13 meshes with gear 10 , Reduction ratio of gear 13 to gear 10 is 2:1 , One end of the rod 16 is fixed on the center of the gear 13. The length of rod 16 is the distance H from the center of gear 13 to the center of gear 5.
The other end of the rod 16 is fixed with a shaft 17. Bearing 18 is sleeved on shaft 17 , Bearing 18 is located in chute 19 , The bearing 18 can slide along the chute 19. The length of chute 19 is 4^{∗}H, The sliding bearing 20 and the sliding bearing 21 are fixed at both ends of the sliding groove 19, respectively , Axis 22 and 23 are fixed on the upper and lower sides of bracket 4 respectively. Axis 22 is parallel to axis 23 , Located at edge length 4^{∗}H, The upper and lower sides of a square whose diagonal intersection point is the center of gear 5 , Sliding bearings 20 and 21 , The axle 22 and the axle 23 are respectively sleeved on the axle 22 and the axle 23. The sliding groove 19 can slide along the axis 22 and 23. , One end of rack 24 is fixed in the middle of chute 19. Rack 24 is parallel to axle 22 and axle 23 , The two sides of rack 24 mesh with gears 25 and 26 respectively , Gear 25 and gear 26 are connected with axle 29 and axle 30 respectively through one-way bearing 27 and one-way bearing 28. And the transmission direction of unidirectional bearing 27 and unidirectional bearing 28 is opposite. Shaft 29 and 30 are connected by bearing 31, bearing 32 and bracket 4, respectively. And extend to the other side of stent 4 , Fixed connection with gear 33 and gear 34 respectively , The gear 35 is fixed on the output shaft 36. The output shaft 36 is fixed on the bracket 4 through the bearing 37. And on the same side as input shaft 2 and control shaft 6 , Gear 35 meshes with gear 33 and gear 34 respectively , When the rack slides to the left in 24 directions , Rack 24 drives gear 25 to rotate clockwise , Drive gear 33 to rotate clockwise through unidirectional bearing 27 and shaft 29 , Gear 33 drives output shaft 36 to rotate counterclockwise through gear 35 , Gear 26 rotates counterclockwise through unidirectional bearing 28 without power output , When the rack slides to the right , Rack 24 drives gear 25 to rotate counterclockwise , Gear 25 rotates counterclockwise through unidirectional bearing 27 without power output , Rack 24 drives gear 26 to rotate clockwise , , Gear 26 drives gear 34 to rotate clockwise through unidirectional bearing 28 and shaft 30 , Gear 34 drives output shaft 36 to rotate counterclockwise through gear 35 , The reciprocating linear motion is converted into continuous rotation in the same direction. Drive gear 8 to rotate when gear 1 rotates , At this point, the control axis does not move. Gear 5 does not rotate , Gears 10 and 13 meshing with gear 5 rotate around gear 5 driven by gear 8 , Drive the rod 16 which is fixed with gear 13 to rotate. At this point, the trajectory of the other end of the rod 16 is a straight line N passing through the center of the gear 5. Rotation control shaft 6 can change the angle between the straight line N and the straight line M parallel to the shaft 20 through the center of gear 5. When the rotation control axis 6 makes the angle between straight line N and straight line M equal to 0 degrees , The longest sliding distance of the sliding groove 19 driven by bearing 18 at one end of rod 16 is 4^{∗}H, When the rotation control axis 6 makes the angle between straight line N and straight line M 90 degrees , The shortest sliding distance of the sliding groove 19 driven by bearing 18 at one end of rod 16 is zero. When the rotation control axis 6 makes the angle between straight line N and straight line M 0-90 degrees , The sliding distance of the sliding groove 19 driven by the bearing 18 at one end of the rod 16 is between 0 and 4^{∗}H. Therefore, the distance of rack 24's reciprocating motion is changed by controlling axis 6. To change the speed of the output shaft 36 , Component B and component a have the same structure , Fixed the input shaft 2 of component A and the input shaft 2 of component B. Fixed the control shaft 6 of component A and the control shaft 6 of component B. And make the center of gear 13 of component a connect to the center of gear 5 and Connecting the center of gear 13 of component B to the center of gear 5 is 90 degrees. Fixed the output shaft 36 of component A to the solar wheel C , Fixed the output shaft 36 of component A and the output shaft 36 and inner ring D of component B to the solar wheel C. Planetary gear e meshes with solar gear C and inner ring d, respectively , And the rotation direction of solar wheel C and inner ring D is the same. Planetary gear e is connected by three gears through a tripod , The central axis of the tripod acts as the output shaft F of the planetary gear e , It constitutes a continuously variable transmission. The input rotation of power input shaft 2 drives the output shaft f to rotate after changing speed to complete the motion transmission of continuously variable speed. You can also use n parts a together. At this time, the center of gear 13 of component A1 is connected to the center of gear 5 , The angle between the center of gear 13 of component A2 and the center of gear 5 is 90 degrees/(n-1), The angle between adjacent parts A is the same as 90 degrees/(n-1), And they're all in the same 0-90 degree range. Output shaft of each component A , They are all connected in series according to the multi-stage planetary gear reducer. And the direction of rotation is the same. That is, the output shaft of the two components a is fixedly connected with the first solar wheel and the inner gear ring, respectively. And the direction of rotation is the same. Output through first stage planetary gear , As the second stage of the solar wheel , The output shaft of the third part a and the inner ring connection of the second stage , And the direction of rotation is the same as that of the first solar wheel. The output of the second stage planetary gear acts as the third stage solar wheel , And so on , Multiple overlays can be made. When multiple superpositions occur, the rotation speed and direction of the input axis of each component A are the same. The rotation degree and direction of the input of the control axis of each component A are the same.

In the aforementioned multi-functional assemblable automobile, The single-degree-of-freedom joint of the functional component is composed of: Fixed connection of gear 1 and power input shaft 2, And the power input shaft 2 is connected to the bracket 4 through the bearing 3. Fixed connection of gear 5 and control shaft 6, The control shaft 6 is connected to the center of gear 8 through bearing 7. At the same time, the control shaft 6 is connected to the bracket 4 through the bearing 9. Both the power input shaft 2 and the control shaft 6 extend on the same side of the bracket 4. Gear 1 meshes with gear 8, Reduction ratio of gear 1 to gear 8 is 1:1, Gear 9 is connected to shaft 11 through bearing 10, Shaft 11 is fixed on gear 8, And gear 5 meshes with gear 9, Reduction ratio of gear 5 to gear 9 is 1:1, The gear 12 is fixed on the shaft 13. Shaft 13 is connected to gear 8 through bearings., And the center of gear 5, the center of gear 9 and the center of gear 12 are in the same straight line. And gear 12 and gear 9 mesh, Reduction ratio of gear 12 to gear 9 is 2:1, One end of rod 14 is fixed on the center of gear 12., The length of rod 14 is the distance H from the center of gear 12 to the center of gear 5. The other end of the rod 14 is fixed with a shaft 15. Bearings 16 and 17 are respectively sleeved on shaft 15. Bearing 16 is located in chute 18 , The bearing 16 can slide up and down along the chute 18. Bearing 17 is located in chute 19 , The bearing 17 can slide along the chute 19 or so. The length of chute 18 and 19 are 4^{∗}H, Slide groove 18 and 19 overlap vertically with each other , Parallel to the plane of support 4 , The two ends of the chute 18 are respectively fixed with sliding bearing 20 and sliding bearing 21. The two ends of the chute 19 are fixed with sliding bearing 22 and sliding bearing 23 respectively. The upper, the lower, the left and the right of the support 4 are respectively fixed with axle 24, axle 25, axle 26 and axle 27.. Axis 24 is parallel to axis 25 , Located at edge length 4^{∗}H, The upper and lower sides of a square whose diagonal intersection point is the center of gear 5.Sliding bearings 20 and 21 , They are respectively sleeved on axle 24 and axle 25. The sliding groove 17 can slide along the axis 24 and around the axis 25. Axis 26 is parallel to axis 27 , Located at edge length 4^{∗}H, The left and right sides of a square whose diagonal intersection point is the center of gear 5 , Sliding bearings 22 and 23 , The axle 27 and the axle 26 are respectively sleeved. The sliding groove 19 can slide up and down the axis 26 and 27. One end of rack 28 is fixed at one end of chute 18. Rack 28 is parallel to axle 24 and axle 25, Meshing of rack 28 with upper and outer double ring gear 29, One end of rack 30 is fixed at one end of chute 19. Rack 30 is parallel to axle 26 and axle 27, The left side of rack 30 engages with solar wheel 31, Internal and external double gear ring 29 and solar wheel 31 rotate in opposite direction, The planetary gear 32 meshes with the solar gear 31 and the inner and outer double ring 29, respectively. Planetary gear 32 is arranged by three planetary gear triangles. The central axis of the triangle is the output axis 33. Drive gear 8 to rotate when gear 1 rotates,. When gear 5 is fixed and not rotated. The output trajectory of rod 14 is a straight line passing through the center of gear 8. Control Shaft 6 Rotates to Change Gear 5 Position. The angle between the trajectory of the rod 14 and the horizontal line of the center of the gear 8 can be adjusted. Change the amplitude of motion of chute 18 and 19. The rotation speed of inner and outer double gear ring 29 and solar wheel 31 has been changed. Because the inner and outer double gear ring 29 and the solar wheel 31 rotate in opposite directions. It constitutes a differential gear train. Change the rotation speed of output shaft 33. When the rotation speed of inner and outer double gear ring 29 is the same as that of solar wheel 31. In the opposite direction. So the output shaft 33 is stationary. When the internal and external double gear ring 29 and the solar wheel 31 rotate at different speeds, In the opposite direction. So the output shaft 33 rotates counterclockwise or clockwise. It can be realized by input different control angles of the control axis. This constitutes a single-degree-of-freedom joint.

In the aforementioned multi-functional assemblable automobile. The two-degree-of-freedom joint of the functional component is composed of two parts: Fixed connection of gear 1 and power input shaft 2. And the power input shaft 2 is connected to the bracket 4 through the bearing 3. Fixed connection between gear 5 and power input shaft 6. And the power input shaft 6 is connected to the center of gear 8 through bearing 7. At the same time, the power input shaft 6 is connected to the bracket 4 through the bearing 9. Both the power input shaft 2 and the power input shaft 6 extend on the same side of the bracket 4. Gear 1 meshes with gear 8. Gear 10 is connected to shaft 12 through bearing 11. Shaft 12 is fixed on gear 8. And gear 5 meshes with gear 10. Reduction ratio of gear 5 to gear 10 is 1:1. The gear 13 is fixed on the shaft 14. Shaft 14 is connected to gear 8 through bearing 15. The center of gear 5, the center of gear 10 and the center of gear 13 are in the same straight line. And gear 13 meshes with gear 10. Reduction ratio of gear 13 to gear 10 is 2:1. One end of the rod 16 is fixed on the center of the gear 13. The distance H from the center of gear 13 to the center of gear 5 is the length of rod 16. When the gear 1 rotates, the trajectory of the other end point 17 of the rod 16 is a straight line through the center of the gear 8. Rotating power input shaft 6.,The angle between the trajectory straight line of the other end point 17 of the rod 16 and the straight line parallel to the upper and lower edges of the support 4 through the center of the gear 8 can be changed. Power input shaft 2 and power input shaft 6 rotate respectively, Any point in the circle with radius 2H can be controlled by the end point 17. It forms a two-degree-of-freedom joint.

In the aforementioned multi-functional assemblable automobile, The Four-Degree-of-Freedom mechanical leg of the functional component includes: Circular bracket 1. A bearing 2 and a bearing 3 are mounted on the circular support 1. The connection of bearing 2 and bearing 3 axes passes through the center of circular support 1. And the connecting line of bearing 2 and bearing 3 axes is parallel to the plane where the circular support 1 is located. Ring 4, Ring 5 and Ring 6 are connected through the inner and outer sleeves of bearings. So that ring 4, ring 5 and ring 6 can rotate concentrically. Fixed mounting bearings 7 and 8 on ring 4. The connection of bearing 7 and bearing 8 axes passes through the center of ring 4. And it coincides with the connection of bearing 2 and bearing 3 axes. Parallel to the plane of the circular support 1.
Fixed mounting bearings 9 and 10 on ring 4. The connection between bearing 9 and bearing 10 axes passes through the center of ring 4. It intersects vertically with the connection lines of bearing 2 and bearing 3 axes. Parallel to the plane of the circular support 1. Power input shaft 11 is installed into bearing 2 and 7. Fixed connection with bevel gear 10. Meshing between bevel gear 10 and bevel gear 11. The bevel gear 11 is fixed on the upper surface of the ring 5. Power input shaft 12 is installed in bearing 3 and 8. Fixed connection with bevel gear 13. Meshing between bevel gear 13 and bevel gear 14. Bevel gear 14 is fixed on the upper surface of ring 6. Ring 15 and rod 16 fixed connection. Fixed connection between the midpoint of rod 16 and the midpoint of rod 17. And pole 16 and pole 17 are perpendicular to each other. And parallel to the plane where the circular support 1 is located. Rod 17 ends are installed into bearing 9 and bearing 10 respectively. The ring 15 can rotate around bearing 9 and bearing 10. The ring 15 is connected with the cylinder 18 and the cylinder 19 through the bearing sleeve. So that the ring 17, the cylinder 18 and the cylinder 19 can rotate concentrically. The drive cylinder 20 is sleeved on the rod 16 through a bearing. Fixed connection between one end of driving cylinder 20 and bevel gear 21, And mesh with bevel gear 11. The other end of the transmission cylinder 20 is fixed with the bevel gear 22., And mesh with bevel gear 23. The bevel gear 23 is fixed on the upper surface of the cylinder 18. The drive cylinder 24 is sleeved on the rod 16 through a bearing. Fixed connection between one end of transmission cylinder 24 and bevel gear 25., And mesh with bevel gear 13. Fixed connection between the other end of transmission cylinder 24 and bevel gear 26, And mesh with bevel gear 27.Bevel gear 27 is fixed on the upper surface of cylinder 19, One end of rod 28 is fixed to the center of rod 15. And rod 28 is perpendicular to the plane of rod 15 and 16. The length of rod 28 is L., Fixed connection of rod 29 and bevel gear 30. The axis of bevel gear 30 is perpendicular to the axis of rod 29. Axis coincidence of shaft 31 and bevel gear 30. The two ends of the shaft 31 are connected to the left and right sides of the lower surface of the cylinder 18 through bearings, And parallel to pole 15. The lower surface of cylinder 18 is fixed with bevel gear 32. Meshing of bevel gear 32 and bevel gear 30. Axis coincidence of bevel gear 32 and bevel gear 27, And the transmission ratio is 1:1. The axes of bevel gears 26 and 30 are perpendicular, and the transmission ratio is 1:2.Fixed connection between output shaft of single-pass joint 33 and dynamic input shaft 11. Fixed connection between output shaft and dynamic input shaft 12 of single-degree-of-freedom joint 34. The other end point 17 of the rod 16 of the joint 35 with two degrees of freedom is fixed to the cylinder 36. And the cylinder 36 is sleeved on the rod 28 through the sliding bearing 37. The bracket 4 of the joint 38 with two degrees of freedom is fixed to the circular bracket 1 through the cylinder 39. And the plane of the support 4 of the joint 38 with two degrees of freedom is parallel to that of the circular support 1.The output axis of the single-degree-of-freedom joint 40 is fixed to the power input axis 2 of the two-degree-of-freedom joint 38. Fixed connection between output axis of single-degree-of-freedom joint 41 and dynamic input axis 6 of two-degree-of-freedom joint 38. The control axes of single-degree-of-freedom joint 33, single-degree-of-freedom joint 34, single-degree-of-freedom joint 40 and single-degree-of-freedom joint 41 are respectively connected with servo motors 42, 43, 44 and 45. The dynamic input axes of single-degree-of-freedom joint 33, single-degree-of-freedom joint 34, single-degree-of-freedom joint 40 and single-degree-of-freedom joint 41 are all connected with the dynamic interface F on the basic components. It forms a Four-Degree-of-Freedom mechanical leg.

In the aforementioned multi-functional assemblable automobile. The self-adapting flapping wing of the functional component is composed of a flapping wing and a flapping wing. Rectangular bracket 1, One of the edges of the rectangular bracket 1 is edge 2, Both ends of side 2 pass through bearing 3, bearing 4 is connected to rod 5 and rod 6. So that the rectangular bracket 1 can flutter up and down around one side 2. Shaft 7 is connected to edges 10 and 11 of rectangular support 1 through bearings 8 and 9. The rectangular blade 12 is fixed along the central line to the axis 7. The 13 ends of the 12 sides of the rectangular blade extend below the rectangular bracket 1. Formation Limit.
So that the rotation of the rectangular blade 12 can only rotate along axis 7 below the rectangular support 1. The edge 13 of the rectangular blade 12 is connected to the rod 14 through a bearing. Multiple identical rectangular blades are connected to the rectangular bracket 1 in the same way. When the first rectangular blade rotates around axis 7, Several other rectangular blades also rotate synchronously with the rectangular blade 12. One end of rod 15 is connected to edge 16 of rectangular blade 12 by bearing. The other end of the rod 15 is connected to the chute 17 through a bearing. The ends of the chute 17 are connected to the rods 20 and 21 through the sliding bearings 18 and 19.The sliding groove 17 can slide up and down the rod 20 and 21.Slide groove 17 is equipped with bearing 22., Bearing 22 can slide along chute 17 or so. The end point 17 of the two-degree-of-freedom joint is connected to the bearing 22 through the shaft. When the dynamic input axis 2 of the aforementioned two-degree-of-freedom joint is input to rotary motion. Drive the sliding chute 17 up and down. The dynamic input shaft 6 of the aforementioned two-degree-of-freedom joint is input with different rotation angles. Adjustable distance of up and down movement of chute 17. Slide groove 17 drive rod 15 move up and down. When rod 15 moves up, Rectangular blade 12 rotates upward around axis 7 under force .Drive other rectangular blades to rotate synchronously through rod 14.If the upward air pressure of the rectangular blade 12 is greater than that of the rod 15, the upward rotation force of the rectangular blade 12 around axis 7 is given. Then the rectangular bracket 1 moves upward. At the same time, the rectangular blade 12 does not rotate. Drive other rectangular blades to synchronize. Whether the rectangular blade rotates or not is self-adaptive according to the force condition. When pole 15 moves downward Rectangular blade 12 rotates downward around axis 7 under force. Drive other rectangular blades to rotate synchronously through rod 15. When rotated parallel to the plane of the rectangular bracket 1, it will not rotate due to the restriction of edge 13 of the rectangular blade 12. As the rectangular bracket 1 slaps the air downward, it generates upward lift. An adaptive flapping wing is formed.

In the aforementioned multi-functional assemblable automobile. The two-degree-of-freedom wheels of the functional components are made of: Fixed connection between hub 1 and transmission shaft 2. Drive shaft 2 is hollow shaft. Drive shaft 3 is located in drive shaft 2. And it is connected with the transmission shaft 2 through the bearing. Drive shaft 3 passes through drive shaft 2. And enter hub 1. Fixed connection with bevel gear 4. Meshing between bevel gear 5 and bevel gear 4. Fixed connection of bevel gear 5 and shaft 6. Shaft 6 is connected to hub 1 through bearing 7. And the axis of axle 6 passes through the center of hub 1. And it is perpendicular to the axis of the drive shaft 3.
The other end of shaft 6 is fixed to bevel gear 8. Meshing between bevel gear 8 and bevel gear 9. Fixed connection of bevel gear 9 and shaft 10. Shaft 10 is connected to support 11 by bearing. Bracket 11 is fixed on hub 1. Small tyre 12 is fixed on axle 10. And the axis of axis 10 is perpendicular to the axis of hub 1. The combined mechanism of multiple bevel gears 5, Shaft6, Bearing7, Bevel gear 8, Bevel gear 9, Shaft 10, Bracket 11 and Small tyre 12 is evenly distributed on hub 1. And mesh through bevel gear 5 and bevel gear 4 respectively. It forms a two-degree-of-freedom wheel.When the transmission shaft 2 and 3 rotate at the same speed in the same direction, Bevel gear 5 meshed bevel gear 4 fixed non-rotation. Simultaneously rotates with the hub. Small tires, such as 12, and so on, remain stationary. When the transmission shaft 2 and 3 rotate in the same direction, At the same time, when the speed of transmission shaft 2 is greater than that of transmission shaft 3. Autobiography of bevel gear 5 driven by transmission shaft 2. Drive the small tyre 12 to rotate counterclockwise or clockwise. When the transmission shaft 2 and 3 rotate in the same direction, At the same time, when the speed of transmission shaft 2 is less than that of transmission shaft 3. Autobiography of bevel gear 5 driven by transmission shaft 2. Drive the small tyre 12 to rotate clockwise or counterclockwise. In this way, the hub can rotate at the same time. More than one small tire is stationary. Multiple small tyres rotate clockwise. Multiple small tyres rotate counterclockwise. Active control of three states. Control of Two Degrees of Freedom for Vertical Crossing. Realizing the Motion Function of Spherical Tire.

New Control Technology. The rotational motion of the above-mentioned single-degree-of-freedom joint has a mechanical constant. That is, gear 8 rotates 180 degrees for a control period. Control axis input an angle, The output axis can be rotated at a corresponding angle. The angle of input axis is different. The rotation angle of the output shaft is also different. And it's all done in a mechanical constant. And it can be controlled in real time. Real-time change of input angle of control axis. As long as the input of the input shaft is completed within a mechanical constant. The output corresponding to the input angle of the input axis is fixed. Adjusting the mechanical constants of each single-degree-of-freedom joint. Synchronization of mechanical constants of various degrees of freedom. It constitutes a parallel control system. To control the completion time of mechanical constants is to control the rotation speed of the input shaft.. You can adjust the speed of the whole system. All are rigid connections. It ensures that every degree of freedom can achieve the anticipated action goal. Each degree of freedom is guaranteed by engine power. In this way, a sequential logic control mechanical structure with mechanical constants as control period is formed. Programmable Control. The input angle of the input shaft can be manually controlled or the input angle of the input shaft can be controlled by a servo motor. Human-machine interface is friendly. Realize a DOF of Series and Parallel Joint Control. Improving the accuracy of control.

### Description of the drawings:

Figure 1 Basic Components

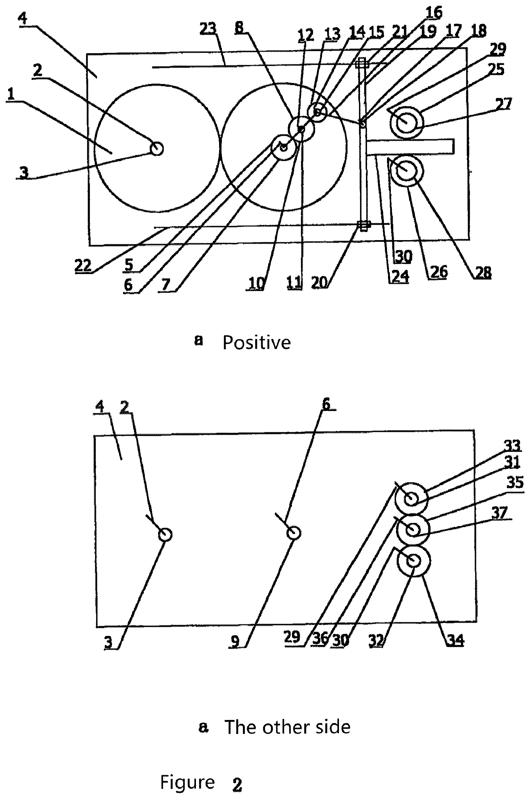

Figure. 2 Continuously variable transmission

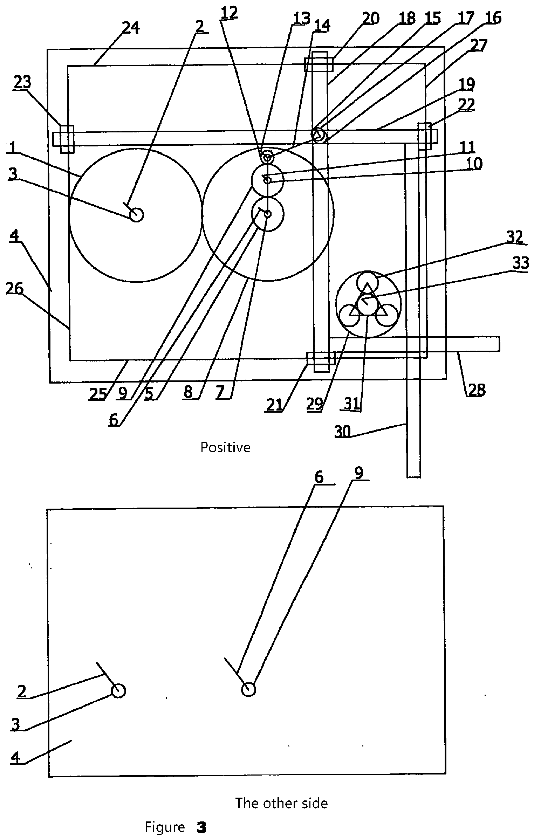

Figure. 3 Single Degree of Freedom Joint

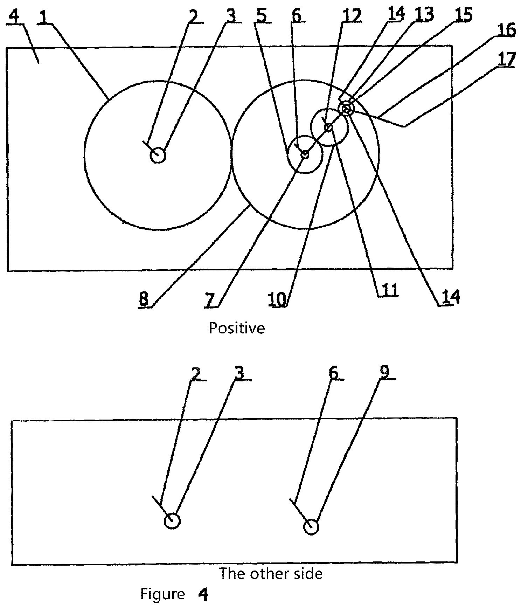

Figure. 4 Two-degree-of-freedom joints

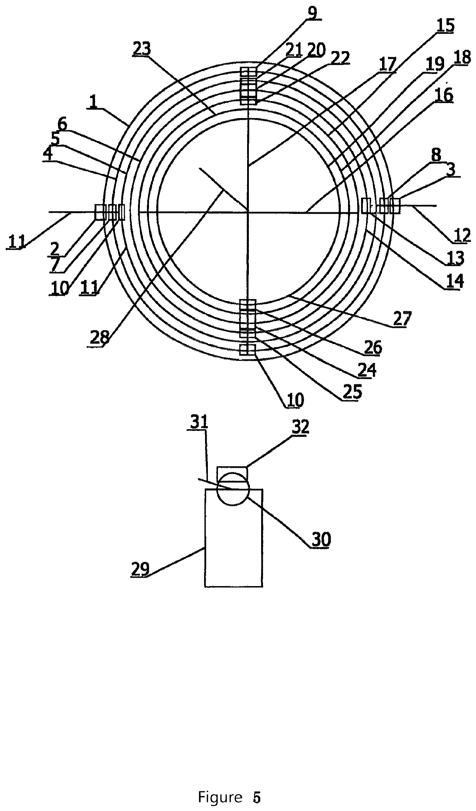

Figure. 5 4 Degree of Freedom Mechanical Leg

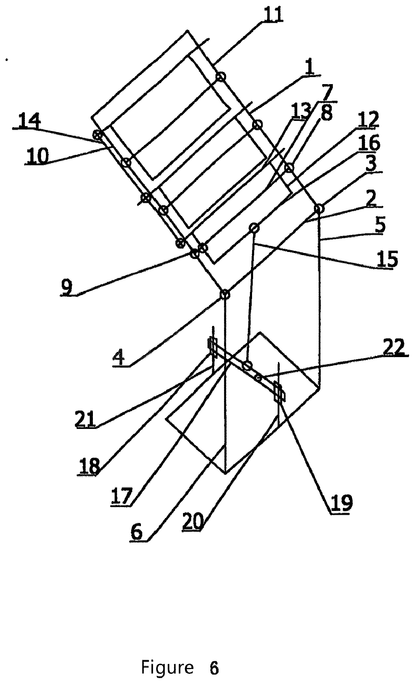

Figure. 6 Adaptive Flapping Wing
Figure. 7 2 Wheels of Degree of Freedom

### Specific implementation methods

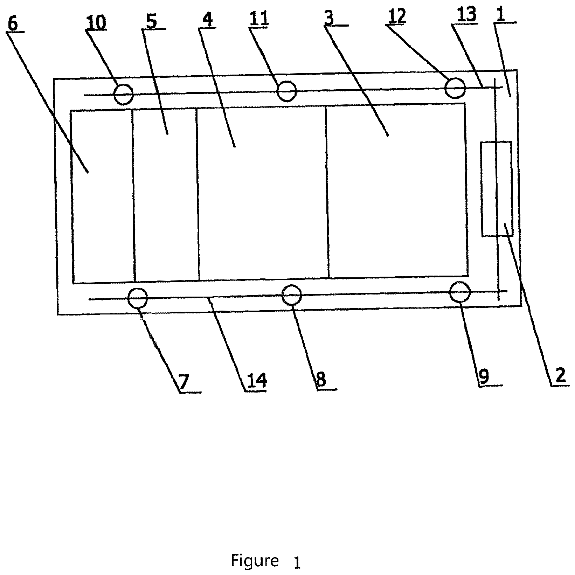

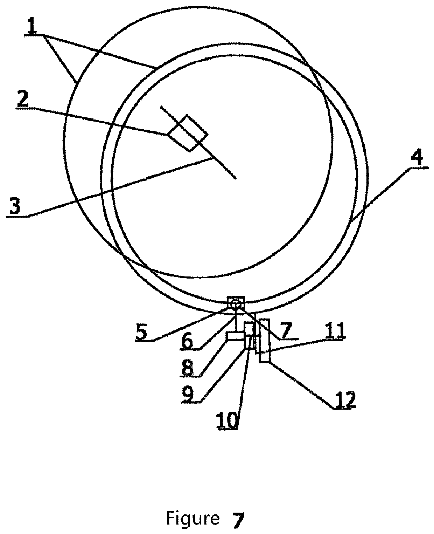

A basic component plus two functional components, a continuously variable transmission , Connect the input terminals of the two CVT with the power interfaces of the basic components in Figure 7 and 10 of Figure 1 respectively. The output end is connected with two tyres respectively. The control shaft is fixed by connecting rod. , Connect steering wheel through turbine worm reducer , A two-wheel drive vehicle is formed. Both the Forerunner and Backrunner can be used.

A basic component plus two functional components , Two Functional Components CVT , Connect the input end of the CVT with the power interface of the basic components, Figure 8 and Figure 11 of Figure 1 respectively. The output end is connected to the input end of the two differential respectively. Two differential output terminals are connected with front and rear tires respectively. The control shaft is fixed by connecting rod. Connect steering wheel through turbine worm reducer , A four-wheel drive vehicle is formed.

A basic component plus four functional components , Four CVT , The input terminals of CVT 1 are connected to the power interfaces of the basic components respectively in Figure 1. The output end is connected with the outer input end of the front two DOF tires, left and right respectively. The input terminals of CVT 2 are connected to the power interfaces of the basic components respectively in Figure 10 of Figure 1. The output end is connected with the inner input end of the front two DOF tires. The input terminals of CVT 3 are connected to the power interfaces of the basic components respectively in Figure 1.9 , The output end is connected with the outer input end of the rear two-degree-of-freedom tires , left and right respectively. The input terminals of CVT 4 are connected to the power interfaces of the basic components respectively in Figure 12 of Figure 1. The output end is connected with the inner input end of the rear and left two-degree-of-freedom tires respectively. Controlling the Speed of Four CVT , The function of spherical tire can be realized.

A basic component plus a Four-Degree-of-Freedom mechanical leg , Four Four-Degree-of-Freedom legs are connected with the 7, 9, 10 and 12 of the power interface Fig. 1, respectively. Control axes of each degree of freedom are controlled separately , The motion of quadruped robot can be realized.

A basic component with two adaptive flapping wings ,Two adaptive flapping wings are connected to the power interface figure 8 and 11 respectively. Control Shafts of Two Adaptive Flapping Wings , It can adjust the amplitude and speed of flapping of two wings , And the direction of flutter. Two-wing flapping flight can be realized.

Different basic components and functional components can be combined to produce different functions of the car, collectively known as the car family.

## Claims

1. In the aforementioned multi-functional assemblable automobile.The basic components are as follows: Chassis 1 is located at the bottom of the car. The chassis 1 is equipped with engine 2, cockpit 3, crew cabin 4, energy cabin 5 and luggage cabin 6. There are several power interfaces on both sides of chassis 1. 7, 8, 9, 10, 11, 12 , The number of power interfaces can be increased as needed. The engine is decelerated by the reducer and connected with each power interface through the transmission shaft 13 and 14. Make the speed of each power interface consistent , And when the load of a power interface changes, the rotation speed turns faster or slower. Speed of engine is faster or slower by transmission of transmission shaft 13 and 14 , The rotational speed of other power interfaces will synchronize faster or slower.

2. In the aforementioned multi-functional assemblable automobile. The functional component CVT is composed of component a, component b, solar wheel c, inner gear ring D and planetary gear E. Component A is fixed by gear 1 and power input shaft 2. And the power input shaft 2 is fixed on the bracket 4 through the bearing 3. Fixed connection of gear 5 and control shaft 6 , And the control shaft 6 is fixed at the center of gear 8 through bearing 7. At the same time, the control shaft 6 is fixed on the support 4 through the bearing 9. Both the power input shaft 2 and the control shaft 6 extend on the same side of the bracket 4. Gear 1 meshes with gear 8 , Gear 10 is connected to shaft 12 through bearing 11 , Shaft 12 is fixed on gear 8 , It is located on the straight line L passing through the center of 8 circles of the gear. And gear 5 meshes with gear 10 , Reduction ratio of gear 5 to gear 10 is 1:1 , The gear 13 is fixed on the shaft 14. Shaft 14 is fixed on gear 8 through bearing 15. It is located on the straight line L passing through the center of 8 circles of the gear. And gear 13 meshes with gear 10 , Reduction ratio of gear 13 to gear 10 is 2:1 , One end of the rod 16 is fixed on the center of the gear 13. The length of rod 16 is the distance H from the center of gear 13 to the center of gear 5.
The other end of the rod 16 is fixed with a shaft 17. Bearing 18 is sleeved on shaft 17 , Bearing 18 is located in chute 19 , The bearing 18 can slide along the chute 19. The length of chute 19 is 4^{∗}H, The sliding bearing 20 and the sliding bearing 21 are fixed at both ends of the sliding groove 19, respectively , Axis 22 and 23 are fixed on the upper and lower sides of bracket 4 respectively. Axis 22 is parallel to axis 23 , Located at edge length 4^{∗}H, The upper and lower sides of a square whose diagonal intersection point is the center of gear 5 , Sliding bearings 20 and 21 , The axle 22 and the axle 23 are respectively sleeved on the axle 22 and the axle 23. The sliding groove 19 can slide along the axis 22 and 23. , One end of rack 24 is fixed in the middle of chute 19. Rack 24 is parallel to axle 22 and axle 23 , The two sides of rack 24 mesh with gears 25 and 26 respectively , Gear 25 and gear 26 are connected with axle 29 and axle 30 respectively through one-way bearing 27 and one-way bearing 28. And the transmission direction of unidirectional bearing 27 and unidirectional bearing 28 is opposite. Shaft 29 and 30 are connected by bearing 31, bearing 32 and bracket 4, respectively. And extend to the other side of stent 4 , Fixed connection with gear 33 and gear 34 respectively , The gear 35 is fixed on the output shaft 36. The output shaft 36 is fixed on the bracket 4 through the bearing 37. And on the same side as input shaft 2 and control shaft 6 , Gear 35 meshes with gear 33 and gear 34 respectively , When the rack slides to the left in 24 directions , Rack 24 drives gear 25 to rotate clockwise , Drive gear 33 to rotate clockwise through unidirectional bearing 27 and shaft 29 , Gear 33 drives output shaft 36 to rotate counterclockwise through gear 35 , Gear 26 rotates counterclockwise through unidirectional bearing 28 without power output , When the rack slides to the right , Rack 24 drives gear 25 to rotate counterclockwise , Gear 25 rotates counterclockwise through unidirectional bearing 27 without power output , Rack 24 drives gear 26 to rotate clockwise , , Gear 26 drives gear 34 to rotate clockwise through unidirectional bearing 28 and shaft 30 , Gear 34 drives output shaft 36 to rotate counterclockwise through gear 35 , The reciprocating linear motion is converted into continuous rotation in the same direction. Drive gear 8 to rotate when gear 1 rotates , At this point, the control axis does not move. Gear 5 does not rotate , Gears 10 and 13 meshing with gear 5 rotate around gear 5 driven by gear 8 , Drive the rod 16 which is fixed with gear 13 to rotate. At this point, the trajectory of the other end of the rod 16 is a straight line N passing through the center of the gear 5. Rotation control shaft 6 can change the angle between the straight line N and the straight line M parallel to the shaft 20 through the center of gear 5. When the rotation control axis 6 makes the angle between straight line N and straight line M equal to 0 degrees , The longest sliding distance of the sliding groove 19 driven by bearing 18 at one end of rod 16 is 4^{∗}H, When the rotation control axis 6 makes the angle between straight line N and straight line M 90 degrees , The shortest sliding distance of the sliding groove 19 driven by bearing 18 at one end of rod 16 is zero. When the rotation control axis 6 makes the angle between straight line N and straight line M 0-90 degrees , The sliding distance of the sliding groove 19 driven by the bearing 18 at one end of the rod 16 is between 0 and 4^{∗}H. Therefore, the distance of rack 24's reciprocating motion is changed by controlling axis 6. To change the speed of the output shaft 36 , Component B and component a have the same structure , Fixed the input shaft 2 of component A and the input shaft 2 of component B. Fixed the control shaft 6 of component A and the control shaft 6 of component B. And make the center of gear 13 of component a connect to the center of gear 5 and Connecting the center of gear 13 of component B to the center of gear 5 is 90 degrees. Fixed the output shaft 36 of component A to the solar wheel C , Fixed the output shaft 36 of component A and the output shaft 36 and inner ring D of component B to the solar wheel C. Planetary gear e meshes with solar gear C and inner ring d, respectively , And the rotation direction of solar wheel C and inner ring D is the same. Planetary gear e is connected by three gears through a tripod , The central axis of the tripod acts as the output shaft F of the planetary gear e , It constitutes a continuously variable transmission. The input rotation of power input shaft 2 drives the output shaft f to rotate after changing speed to complete the motion transmission of continuously variable speed. You can also use n parts a together. At this time, the center of gear 13 of component A1 is connected to the center of gear 5 , The angle between the center of gear 13 of component A2 and the center of gear 5 is 90 degrees/(n-1), The angle between adjacent parts A is the same as 90 degrees/(n-1), And they're all in the same 0-90 degree range. Output shaft of each component A , They are all connected in series according to the multi-stage planetary gear reducer. And the direction of rotation is the same. That is, the output shaft of the two components a is fixedly connected with the first solar wheel and the inner gear ring, respectively. And the direction of rotation is the same. Output through first stage planetary gear , As the second stage of the solar wheel , The output shaft of the third part a and the inner ring connection of the second stage , And the direction of rotation is the same as that of the first solar wheel. The output of the second stage planetary gear acts as the third stage solar wheel , And so on , Multiple overlays can be made. When multiple superpositions occur, the rotation speed and direction of the input axis of each component A are the same. The rotation degree and direction of the input of the control axis of each component A are the same.

3. In the aforementioned multi-functional assemblable automobile. The single-degree-of-freedom joint of the functional component is composed of: Fixed connection of gear 1 and power input shaft 2, and the power input shaft 2 is connected to the bracket 4 through the bearing 3. Fixed connection of gear 5 and control shaft 6, the control shaft 6 is connected to the center of gear 8 through bearing 7. At the same time, the control shaft 6 is connected to the bracket 4 through the bearing 9. Both the power input shaft 2 and the control shaft 6 extend on the same side of the bracket 4. Gear 1 meshes with gear 8, Reduction ratio of gear 1 to gear 8 is 1:1, Gear 9 is connected to shaft 11 through bearing 10, Shaft 11 is fixed on gear 8, And gear 5 meshes with gear 9, Reduction ratio of gear 5 to gear 9 is 1:1, The gear 12 is fixed on the shaft 13. Shaft 13 is connected to gear 8 through bearings., And the center of gear 5, the center of gear 9 and the center of gear 12 are in the same straight line. And gear 12 and gear 9 mesh, Reduction ratio of gear 12 to gear 9 is 2:1, One end of rod 14 is fixed on the center of gear 12., The length of rod 14 is the distance H from the center of gear 12 to the center of gear 5. The other end of the rod 14 is fixed with a shaft 15. Bearings 16 and 17 are respectively sleeved on shaft 15. Bearing 16 is located in chute 18 , the bearing 16 can slide up and down along the chute 18. Bearing 17 is located in chute 19 , The bearing 17 can slide along the chute 19 or so. The length of chute 18 and 19 are 4^{∗}H, Slide groove 18 and 19 overlap vertically with each other , Parallel to the plane of support 4 , The two ends of the chute 18 are respectively fixed with sliding bearing 20 and sliding bearing 21. The two ends of the chute 19 are fixed with sliding bearing 22 and sliding bearing 23 respectively. The upper, the lower, the left and the right of the support 4 are respectively fixed with axle 24, axle 25, axle 26 and axle 27.. Axis 24 is parallel to axis 25 , Located at edge length 4^{∗}H, The upper and lower sides of a square whose diagonal intersection point is the center of gear 5.Sliding bearings 20 and 21 , They are respectively sleeved on axle 24 and axle 25. The sliding groove 17 can slide along the axis 24 and around the axis 25. Axis 26 is parallel to axis 27 , Located at edge length 4^{∗}H, The left and right sides of a square whose diagonal intersection point is the center of gear 5 , Sliding bearings 22 and 23 , The axle 27 and the axle 26 are respectively sleeved. The sliding groove 19 can slide up and down the axis 26 and 27. One end of rack 28 is fixed at one end of chute 18. Rack 28 is parallel to axle 24 and axle 25, Meshing of rack 28 with upper and outer double ring gear 29, One end of rack 30 is fixed at one end of chute 19. Rack 30 is parallel to axle 26 and axle 27, The left side of rack 30 engages with solar wheel 31, Internal and external double gear ring 29 and solar wheel 31 rotate in opposite direction, The planetary gear 32 meshes with the solar gear 31 and the inner and outer double ring 29, respectively. Planetary gear 32 is arranged by three planetary gear triangles. The central axis of the triangle is the output axis 33. Drive gear 8 to rotate when gear 1 rotates,. When gear 5 is fixed and not rotated. The output trajectory of rod 14 is a straight line passing through the center of gear 8. Control Shaft 6 Rotates to Change Gear 5 Position. The angle between the trajectory of the rod 14 and the horizontal line of the center of the gear 8 can be adjusted. Change the amplitude of motion of chute 18 and 19. The rotation speed of inner and outer double gear ring 29 and solar wheel 31 has been changed. Because the inner and outer double gear ring 29 and the solar wheel 31 rotate in opposite directions. It constitutes a differential gear train. Change the rotation speed of output shaft 33. When the rotation speed of inner and outer double gear ring 29 is the same as that of solar wheel 31. In the opposite direction. So the output shaft 33 is stationary. When the internal and external double gear ring 29 and the solar wheel 31 rotate at different speeds, In the opposite direction. So the output shaft 33 rotates counterclockwise or clockwise. It can be realized by input different control angles of the control axis. This constitutes a single-degree-of-freedom joint.

4. In the aforementioned multi-functional assemblable automobile. The two-degree-of-freedom joint of the functional component is composed of two parts: Fixed connection of gear 1 and power input shaft 2. And the power input shaft 2 is connected to the bracket 4 through the bearing 3. Fixed connection between gear 5 and power input shaft 6. And the power input shaft 6 is connected to the center of gear 8 through bearing 7. At the same time, the power input shaft 6 is connected to the bracket 4 through the bearing 9. Both the power input shaft 2 and the power input shaft 6 extend on the same side of the bracket 4. Gear 1 meshes with gear 8. Gear 10 is connected to shaft 12 through bearing 11. Shaft 12 is fixed on gear 8. And gear 5 meshes with gear 10. Reduction ratio of gear 5 to gear 10 is 1:1. The gear 13 is fixed on the shaft 14. Shaft 14 is connected to gear 8 through bearing 15. The center of gear 5, the center of gear 10 and the center of gear 13 are in the same straight line. And gear 13 meshes with gear 10. Reduction ratio of gear 13 to gear 10 is 2:1. One end of the rod 16 is fixed on the center of the gear 13. The distance H from the center of gear 13 to the center of gear 5 is the length of rod 16. When the gear 1 rotates, the trajectory of the other end point 17 of the rod 16 is a straight line through the center of the gear 8. Rotating power input shaft 6., The angle between the trajectory straight line of the other end point 17 of the rod 16 and the straight line parallel to the upper and lower edges of the support 4 through the center of the gear 8 can be changed. Power input shaft 2 and power input shaft 6 rotate respectively, Any point in the circle with radius 2H can be controlled by the end point 17. It forms a two-degree-of-freedom joint.

5. In the aforementioned multi-functional assemblable automobile. The Four-Degree-of-Freedom mechanical leg of the functional component includes: Circular bracket 1. A bearing 2 and a bearing 3 are mounted on the circular support 1. The connection of bearing 2 and bearing 3 axes passes through the center of circular support 1. And the connecting line of bearing 2 and bearing 3 axes is parallel to the plane where the circular support 1 is located. Ring 4, Ring 5 and Ring 6 are connected through the inner and outer sleeves of bearings. So that ring 4, ring 5 and ring 6 can rotate concentrically. Fixed mounting bearings 7 and 8 on ring 4. The connection of bearing 7 and bearing 8 axes passes through the center of ring 4. And it coincides with the connection of bearing 2 and bearing 3 axes. Parallel to the plane of the circular support 1.
Fixed mounting bearings 9 and 10 on ring 4. The connection between bearing 9 and bearing 10 axes passes through the center of ring 4. It intersects vertically with the connection lines of bearing 2 and bearing 3 axes. Parallel to the plane of the circular support 1. Power input shaft 11 is installed into bearing 2 and 7. Fixed connection with bevel gear 10. Meshing between bevel gear 10 and bevel gear 11. The bevel gear 11 is fixed on the upper surface of the ring 5. Power input shaft 12 is installed in bearing 3 and 8. Fixed connection with bevel gear 13. Meshing between bevel gear 13 and bevel gear 14. Bevel gear 14 is fixed on the upper surface of ring 6. Ring 15 and rod 16 fixed connection. Fixed connection between the midpoint of rod 16 and the midpoint of rod 17. And pole 16 and pole 17 are perpendicular to each other. And parallel to the plane where the circular support 1 is located. Rod 17 ends are installed into bearing 9 and bearing 10 respectively. The ring 15 can rotate around bearing 9 and bearing 10. The ring 15 is connected with the cylinder 18 and the cylinder 19 through the bearing sleeve. So that the ring 17, the cylinder 18 and the cylinder 19 can rotate concentrically. The drive cylinder 20 is sleeved on the rod 16 through a bearing. Fixed connection between one end of driving cylinder 20 and bevel gear 21, And mesh with bevel gear 11. The other end of the transmission cylinder 20 is fixed with the bevel gear 22., And mesh with bevel gear 23. The bevel gear 23 is fixed on the upper surface of the cylinder 18. The drive cylinder 24 is sleeved on the rod 16 through a bearing. Fixed connection between one end of transmission cylinder 24 and bevel gear 25., And mesh with bevel gear 13. Fixed connection between the other end of transmission cylinder 24 and bevel gear 26, And mesh with bevel gear 27.Bevel gear 27 is fixed on the upper surface of cylinder 19, One end of rod 28 is fixed to the center of rod 15. And rod 28 is perpendicular to the plane of rod 15 and 16. The length of rod 28 is L., Fixed connection of rod 29 and bevel gear 30. The axis of bevel gear 30 is perpendicular to the axis of rod 29. Axis coincidence of shaft 31 and bevel gear 30. The two ends of the shaft 31 are connected to the left and right sides of the lower surface of the cylinder 18 through bearings, And parallel to pole 15. The lower surface of cylinder 18 is fixed with bevel gear 32. Meshing of bevel gear 32 and bevel gear 30. Axis coincidence of bevel gear 32 and bevel gear 27, And the transmission ratio is 1:1. The axes of bevel gears 26 and 30 are perpendicular, And the transmission ratio is 1:2.Fixed connection between output shaft of single-pass joint 33 and dynamic input shaft 11. Fixed connection between output shaft and dynamic input shaft 12 of single-degree-of-freedom joint 34. The other end point 17 of the rod 16 of the joint 35 with two degrees of freedom is fixed to the cylinder 36. And the cylinder 36 is sleeved on the rod 28 through the sliding bearing 37. The bracket 4 of the joint 38 with two degrees of freedom is fixed to the circular bracket 1 through the cylinder 39. And the plane of the support 4 of the joint 38 with two degrees of freedom is parallel to that of the circular support 1. The output axis of the single-degree-of-freedom joint 40 is fixed to the power input axis 2 of the two-degree-of-freedom joint 38. Fixed connection between output axis of single-degree-of-freedom joint 41 and dynamic input axis 6 of two-degree-of-freedom joint 38. The control axes of single-degree-of-freedom joint 33, single-degree-of-freedom joint 34, single-degree-of-freedom joint 40 and single-degree-of-freedom joint 41 are respectively connected with servo motors 42, 43, 44 and 45. The dynamic input axes of single-degree-of-freedom joint 33, single-degree-of-freedom joint 34, single-degree-of-freedom joint 40 and single-degree-of-freedom joint 41 are all connected with the dynamic interface F on the basic components. It forms a Four-Degree-of-Freedom mechanical leg.

6. In the aforementioned multi-functional assemblable automobile. The self-adapting flapping wing of the functional component is composed of a flapping wing and a flapping wing. Rectangular bracket 1, One of the edges of the rectangular bracket 1 is edge 2, Both ends of side 2 pass through bearing 3, bearing 4 is connected to rod 5 and rod 6. So that the rectangular bracket 1 can flutter up and down around one side 2. Shaft 7 is connected to edges 10 and 11 of rectangular support 1 through bearings 8 and 9. The rectangular blade 12 is fixed along the central line to the axis 7. The 13 ends of the 12 sides of the rectangular blade extend below the rectangular bracket 1. Formation Limit.
So that the rotation of the rectangular blade 12 can only rotate along axis 7 below the rectangular support 1. The edge 13 of the rectangular blade 12 is connected to the rod 14 through a bearing. Multiple identical rectangular blades are connected to the rectangular bracket 1 in the same way. When the first rectangular blade rotates around axis 7, Several other rectangular blades also rotate synchronously with the rectangular blade 12. One end of rod 15 is connected to edge 16 of rectangular blade 12 by bearing. The other end of the rod 15 is connected to the chute 17 through a bearing. The ends of the chute 17 are connected to the rods 20 and 21 through the sliding bearings 18 and 19.The sliding groove 17 can slide up and down the rod 20 and 21.Slide groove 17 is equipped with bearing 22., Bearing 22 can slide along chute 17 or so. The end point 17 of the two-degree-of-freedom joint is connected to the bearing 22 through the shaft. When the dynamic input axis 2 of the aforementioned two-degree-of-freedom joint is input to rotary motion. Drive the sliding chute 17 up and down. The dynamic input shaft 6 of the aforementioned two-degree-of-freedom joint is input with different rotation angles. Adjustable distance of up and down movement of chute 17. Slide groove 17 drive rod 15 move up and down. When rod 15 moves up, Rectangular blade 12 rotates upward around axis 7 under force .Drive other rectangular blades to rotate synchronously through rod 14.If the upward air pressure of the rectangular blade 12 is greater than that of the rod 15, the upward rotation force of the rectangular blade 12 around axis 7 is given. Then the rectangular bracket 1 moves upward. At the same time, the rectangular blade 12 does not rotate. Drive other rectangular blades to synchronize. Whether the rectangular blade rotates or not is self-adaptive according to the force condition. When pole 15 moves downward Rectangular blade 12 rotates downward around axis 7 under force. Drive other rectangular blades to rotate synchronously through rod 15. When rotated parallel to the plane of the rectangular bracket 1, it will not rotate due to the restriction of edge 13 of the rectangular blade 12. As the rectangular bracket 1 slaps the air downward, it generates upward lift. An adaptive flapping wing is formed.

7. In the aforementioned multi-functional assemblable automobile. The two-degree-of-freedom wheels of the functional components are made of: Fixed connection between hub 1 and transmission shaft 2. Drive shaft 2 is hollow shaft. Drive shaft 3 is located in drive shaft 2. And it is connected with the transmission shaft 2 through the bearing. Drive shaft 3 passes through drive shaft 2. And enter hub 1. Fixed connection with bevel gear 4. Meshing between bevel gear 5 and bevel gear 4. Fixed connection of bevel gear 5 and shaft 6. Shaft 6 is connected to hub 1 through bearing 7. And the axis of axle 6 passes through the center of hub 1. And it is perpendicular to the axis of the drive shaft 3.
The other end of shaft 6 is fixed to bevel gear 8. Meshing between bevel gear 8 and bevel gear 9. Fixed connection of bevel gear 9 and shaft 10. Shaft 10 is connected to support 11 by bearing. Bracket 11 is fixed on hub 1. Small tyre 12 is fixed on axle 10. And the axis of axis 10 is perpendicular to the axis of hub 1. The combined mechanism of multiple bevel gears 5, Shaft6, Bearing7, Bevel gear 8, Bevel gear 9, Shaft 10, Bracket 11 and Small tyre 12 is evenly distributed on hub 1. And mesh through bevel gear 5 and bevel gear 4 respectively. It forms a two-degree-of-freedom wheel. When the transmission shaft 2 and 3 rotate at the same speed in the same direction, Bevel gear 5 meshed bevel gear 4 fixed non-rotation. Simultaneously rotates with the hub. Small tires, such as 12, and so on, remain stationary. When the transmission shaft 2 and 3 rotate in the same direction, At the same time, when the speed of transmission shaft 2 is greater than that of transmission shaft 3. Autobiography of bevel gear 5 driven by transmission shaft 2. Drive the small tyre 12 to rotate counterclockwise or clockwise. When the transmission shaft 2 and 3 rotate in the same direction, At the same time, when the speed of transmission shaft 2 is less than that of transmission shaft 3. Autobiography of bevel gear 5 driven by transmission shaft 2. Drive the small tyre 12 to rotate clockwise or counterclockwise. In this way, the hub can rotate at the same time. More than one small tire is stationary. Multiple small tyres rotate clockwise. Multiple small tyres rotate counterclockwise. Active control of three states. Control of Two Degrees of Freedom for Vertical Crossing. Realizing the Motion Function of Spherical Tire.

8. New Control Technology. The rotational motion of the above-mentioned single-degree-of-freedom joint has a mechanical constant. That is, gear 8 rotates 180 degrees for a control period. Control axis input an angle, The output axis can be rotated at a corresponding angle. The angle of input axis is different. The rotation angle of the output shaft is also different. And it's all done in a mechanical constant. And it can be controlled in real time. Real-time change of input angle of control axis. As long as the input of the input shaft is completed within a mechanical constant. The output corresponding to the input angle of the input axis is fixed. Adjusting the mechanical constants of each single-degree-of-freedom joint. Synchronization of mechanical constants of various degrees of freedom. It constitutes a parallel control system. To control the completion time of mechanical constants is to control the rotation speed of the input shaft.. You can adjust the speed of the whole system. All are rigid connections. It ensures that every degree of freedom can achieve the anticipated action goal. Each degree of freedom is guaranteed by engine power. In this way, a sequential logic control mechanical structure with mechanical constants as control period is formed. Programmable Control. The input angle of the input shaft can be manually controlled or the input angle of the input shaft can be controlled by a servo motor. Human-machine interface is friendly. Realize a DOF of Series and Parallel Joint Control. Improving the accuracy of control.
